(19) Europäisches Patentamt
European Patent Office
Office européen des brevets

(11) EP 4 543 950 B1

(12) # FASCICULE DE BREVET EUROPEEN

(45) Date de publication et mention de la délivrance du brevet:
**05.08.2026 Bulletin 2026/32**

(21) Numéro de dépôt: **23731659.1**

(22) Date de dépôt: **08.06.2023**

(51) Classification Internationale des Brevets (IPC):
***C08F 297/06*** *(2006.01)* ***C08F 4/52*** *(2006.01)*
***C10M 157/04*** *(2006.01)*

(52) Classification Coopérative des Brevets (CPC):
(C-Sets disponibles)
**C08F 297/083; C08F 210/02; C08F 297/06; C10M 157/04;** C10M 2203/1006; C10M 2205/022; C10M 2205/06; C10M 2217/028; C10N 2030/02; C10N 2040/25 (Cont.)

(86) Numéro de dépôt international:
**PCT/EP2023/065359**

(87) Numéro de publication internationale:
**WO 2023/247200 (28.12.2023 Gazette 2023/52)**

(54) **POLYMÈRES DIÉNIQUES RICHES EN ÉTHYLÈNE AYANT UN BLOC POLYVINYLPYRIDINE ET LEUR UTILISATION DANS DES COMPOSITIONS LUBRIFIANTES POUR MOTEUR**

ETHYLENREICHE DIENPOLYMERE MIT EINEM POLYVINYLPYRIDINBLOCK UND DEREN VERWENDUNG IN MOTORSCHMIERMITTELZUSAMMENSETZUNGEN

ETHYLENE-RICH DIENE POLYMERS HAVING A POLYVINYLPYRIDINE BLOCK AND THEIR USE IN ENGINE LUBRICANT COMPOSITIONS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.06.2022 FR 2206247**

(43) Date de publication de la demande:
**30.04.2025 Bulletin 2025/18**

(73) Titulaire: **COMPAGNIE GENERALE DES ETABLISSEMENTS MICHELIN**
**63000 Clermont-Ferrand (FR)**

(72) Inventeurs:
- **SOUCHARD, Thibaut**
  **63040 Clermont-Ferrand Cedex 09 (FR)**
- **THUILLIEZ, Julien**
  **63040 Clermont-Ferrand Cedex 09 (FR)**
- **NGO, Robert**
  **63040 Clermont-Ferrand Cedex 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A2- 1 925 657**
**WO-A1-2019/180356**
**WO-A1-2021/023924**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08F 210/02, C08F 4/52;**
C08F 210/02, C08F 236/06, C08F 226/08,
C08F 2500/27, C08F 2500/32

## Description

Le domaine de l'invention est celui des polymères à blocs contenant un bloc diénique riche en éthylène et un bloc de polyvinylpyridine, destinés à être utilisés dans des huiles de moteur comme additifs pour améliorer la performance de ces huiles à haute température.

Les huiles de moteur, compositions lubrifiantes contenant des huiles de base minérales, sont utilisées dans un moteur pour minimiser à froid les pertes énergétiques causées par des frottements dans le moteur et pour maintenir à chaud un film continu de lubrifiant sur les éléments lubrifiés du moteur. Il est important que la viscosité de la composition lubrifiante diminue le moins possible pendant le fonctionnement à chaud pour éviter la rupture du film lubrifiant.

Les huiles de base minérales représentent un constituant majeur des compositions lubrifiantes que sont les huiles de moteur. La viscosité d'une huile de base minérale diminue avec une augmentation de la température et augmente avec une diminution de la température. Il s'ensuit que la viscosité d'une composition lubrifiante contenant majoritairement une huile de base minérale voit également sa viscosité varier avec la température.

Pour amoindrir l'effet d'une élévation de température sur la viscosité d'une composition lubrifiante, il est connu d'ajouter des additifs à une huile de base minérale. Ces additifs ont un rôle d'épaississement de la composition lubrifiante lorsque la température augmente pour remédier partiellement à la chute de la viscosité à chaud. Ils augmentent généralement la viscosité à haute température pour contrer la diminution de viscosité de l'huile de base minérale. Ces additifs épaississants sont généralement des polymères. Les deux grandes familles de polymères commercialisés à ce titre sont les polymères à fonction ester comme les poly(méth)acrylates et les polymères hydrocarbonés comme les polyisobutylènes, les copolymères d'éthylène et de propylène également appelés OCP, les copolymères de diène et de styrène hydrogénés, ainsi que les polydiènes hydrogénés.

La Demanderesse a découvert que des polymères à blocs contenant un bloc polyvinylpyridine et un bloc qui est un copolymère d'éthylène et de 1,3-butadiène et qui est riche en éthylène augmentaient la viscosité des huiles de moteur à haute température de façon aussi efficace que les OCP.

Ainsi, un premier objet de l'invention est un polymère à blocs contenant un premier bloc et un deuxième bloc, le premier bloc étant un copolymère de 1,3-butadiène et d'éthylène contenant plus de 90% en mole d'unités éthylène, le pourcentage molaire étant exprimé par rapport au nombre total d'unités de répétition constitutives du premier bloc, le deuxième bloc étant un homopolymère d'une vinylpyridine.

Un deuxième objet de l'invention est une composition lubrifiante qui comprend une huile de base minérale et un polymère à blocs conforme à l'invention.

Description :

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Sauf indication contraire, les taux des unités dans le premier bloc sont exprimés en pourcentage molaire par rapport à la totalité des unités de répétition constitutives du premier bloc.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Par l'expression « à base de » utilisée pour définir les constituants d'un système catalytique (ou composition catalytique), on entend le mélange de ces constituants, ou le produit de la réaction d'une partie ou de la totalité de ces constituants entre eux.

Le polymère à blocs conforme à l'invention a pour caractéristique essentielle de contenir deux blocs.

Le premier bloc constitutif du polymère à blocs conforme à l'invention est un copolymère d'éthylène et d'un 1,3-butadiène. Les unités monomères constitutives du premier bloc sont celles résultant de la copolymérisation de l'éthylène et du 1,3-butadiène.

Les unités éthylène présentes dans le premier bloc représentent plus de 90% en moles du nombre total des unités de répétition constitutives du premier bloc. De préférence, les unités éthylène présentes dans le premier bloc représentent moins de 97% en mole du nombre total des unités de répétition constitutives du premier bloc. De manière connue, on entend par unité éthylène une unité qui a pour motif $-(CH_2-CH_2)-$.

De manière connue, le 1,3-butadiène peut s'insérer dans une chaîne polymère en croissance par une insertion 1,4 ou 1,2 pour donner lieu respectivement à la formation d'unité du 1,3-butadiène de configuration 1,4 ou d'unité du 1,3-butadiène de configuration 1,2. Lorsque le premier bloc contient des unités du 1,3-butadiène sous la configuration 1,4, les unités 1,4-trans représentent préférentiellement plus de 50% des unités de configuration 1,4, plus préférentiellement plus

de 80% des unités de configuration 1,4.

Le premier bloc peut contenir en outre des motifs 1,2-cyclohexanediyle, également appelés unités 1,2-cyclohexanediyle de formule (I).

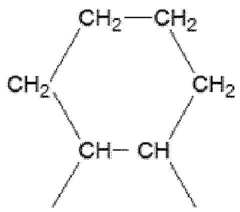

(I)

La présence de ces structures cycliques dans le premier bloc résulte d'une insertion très particulière de l'éthylène et du 1,3-butadiène lors de leur copolymérisation. Le mécanisme d'obtention d'une telle microstructure est par exemple décrit dans le document Macromolecules 2009, 42, 3774-3779. La teneur en motif 1,2-cyclohexanediyle dans le premier bloc peut varier selon les conditions de polymérisation pour former le premier bloc, par exemple selon les teneurs respectives en éthylène et en 1,3-butadiène dans le milieu de polymérisation, selon la pression dans le réacteur de polymérisation, selon le système catalytique de polymérisation comme cela est décrit par exemple dans les documents WO 2021023924, WO 2017103543, WO 2018104669.

Selon un mode de réalisation particulièrement préférentiel de l'invention, le premier bloc contient des motifs 1,2-cyclohexanediyle. De préférence, le taux molaire de motif 1,2-cyclohexanediyle dans le premier bloc est inférieure à 10% du nombre total des unités de répétition constitutives du premier bloc. De manière plus préférentielle, il varie de 1% à moins de 10% du nombre total des unités de répétition constitutives du premier bloc.

Selon un mode de réalisation particulièrement préférentiel de l'invention, le premier bloc est un copolymère statistique d'éthylène et de 1,3-butadiène.

Le deuxième bloc constitutif du polymère à blocs conforme à l'invention a pour caractéristique essentielle d'être un homopolymère d'une vinylpyridine. La vinylpyridine dont les unités monomères sont constitutives du deuxième bloc est une vinylpyridine telle que définie dans les modes de réalisation décrits du procédé conforme à l'invention. De préférence, la vinylpyridine est la 4-vinylpyridine, la 2-vinylpyridine ou leur mélange. De manière plus préférentielle, la vinylpyridine est la 4-vinylpyridine.

Le taux molaire des unités de la vinylpyridine présentes dans le deuxième bloc peut être inférieur à 1% ou très supérieur à 1% du nombre total des unités de répétition constitutives du premier bloc. De préférence, il est supérieur à 0.1% du nombre total des unités de répétition constitutives du premier bloc. De préférence, il est inférieur à 20% du nombre total des unités de répétition constitutives du premier bloc.

Le polymère à blocs selon l'invention est préférentiellement un dibloc. Lorsque le polymère à blocs est un dibloc, il est typiquement de formule A-B dans lequel A désigne le premier bloc, B le deuxième bloc.

Le polymère à blocs conforme à l'invention peut être préparé par un procédé de polymérisation subséquente. Il comprend la polymérisation d'un mélange monomère d'éthylène et du 1,3-butadiène en présence d'un système catalytique pour former le premier bloc, suivie de l'homopolymérisation d'une vinylpyridine pour former le deuxième bloc.

Le système catalytique est à base au moins d'un métallocène de formule (II) et d'un organomagnésien

$$P(Cp^1Cp^2)Nd(BH_4)_{(1+y)}Li_y(THF)_x \qquad (II)$$

$Cp^1$ et $Cp^2$ étant choisis dans le groupe constitué par les groupes fluorényles, les groupes cyclopentadiényles et les groupes indényles, les groupes étant substitués ou non substitués,

P étant un groupe pontant les deux groupes $Cp^1$ et $Cp^2$ et représentant un groupe $ZR^1R^2$, Z représentant un atome de silicium ou de carbone, $R^1$ et $R^2$, identiques ou différents, représentant chacun un groupe alkyle comprenant de 1 à 20 atomes de carbone, de préférence un méthyle,

y, nombre entier, étant égal ou supérieur à 0,

x, nombre entier ou non, étant égal ou supérieur à 0.

Dans la formule (II), l'atome de néodyme est relié à une molécule de ligand constitué des deux groupes $Cp^1$ et $Cp^2$ reliés entre eux par le pont P. De préférence, le symbole P, désigné sous le terme de pont, répond à la formule $ZR^1R^2$, Z représentant un atome de silicium, $R^1$ et $R^2$, identiques ou différents, représentant un groupe alkyle comprenant de 1 à 20 atomes de carbone. De manière plus préférentielle, le pont P est de formule $SiR^1R^2$, $R^1$ et $R^2$, étant identiques et tels que définis précédemment. De manière encore plus préférentielle, P répond à la formule $SiMe_2$.

A titre de groupes cyclopentadiényles, fluorényles et indényles substitués, on peut citer ceux substitués par des groupes alkyles ayant 1 à 6 atomes de carbone ou par des groupes aryles ayant 6 à 12 atomes de carbone ou encore par

des groupes trialkylsilyles tels que $SiMe_3$. Lorsque les ligands $Cp^1$ et $Cp^2$ sont substitués, ils sont préférentiellement substitués par des groupes méthyles, par des groupes butyles, notamment tertiobutyles, ou par des groupes triméthylsilyles. Ces groupes sont préférentiels quel que soit le mode de réalisation de l'invention. Le choix des groupes est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes cyclopentadiényles substitués, on peut citer ceux substitués aussi bien en position 2 (ou 5) qu'en position 3 (ou 4), particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après. On rappelle qu'une substitution en position 2 ou 5 est également dénommée substitution en alpha du pont.

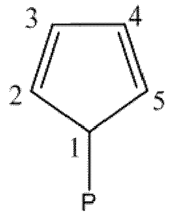

A titre de groupes fluorényles substitués, on peut citer ceux substitués par des groupes alkyles ayant 1 à 6 atomes de carbone ou par des groupes aryles ayant 6 à 12 atomes de carbone. Le choix des groupes est aussi orienté par l'accessibilité aux molécules correspondantes que sont les fluorènes substitués, parce que ces derniers sont disponibles commercialement ou facilement synthétisables.

A titre de groupes fluorényles substitués, on peut citer particulièrement ceux substitués en position 2, 7, 3 ou 6, plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

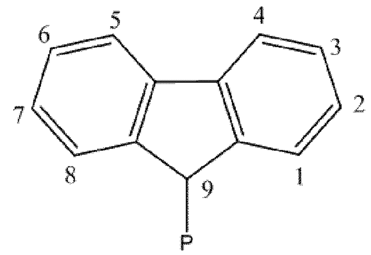

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

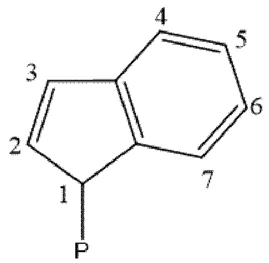

Selon un mode de réalisation de l'invention, $Cp^1$ et $Cp^2$ sont différents, l'un représente un groupe cyclopentadiényle, l'autre un groupe fluorényle. Ce mode de réalisation est particulièrement adapté pour la préparation d'un premier bloc qui est dépourvu de motif 1,2-cyclohexanediyle de formule (I).

Selon un autre mode de réalisation de l'invention, $Cp^1$ et $Cp^2$ sont identiques et sont choisis dans le groupe constitué par les groupes fluorényles substitués et le groupe fluorényle. Avantageusement, $Cp^1$ et $Cp^2$ représentent chacun un groupe fluorényle substitué ou un groupe fluorényle, de préférence un groupe fluorényle. Le groupe fluorényle est de formule $C_{13}H_8$. De préférence, le métallocène est de formule (IIa), (IIb), (IIc), (IId) ou (IIe) dans lesquelles le symbole

Flu représente le groupe fluorényle de formule $C_{13}H_8$.

$[\{Me_2SiFlu_2Nd(\mu\text{-}BH_4)_2Li(THF)\}_2]$ (IIa)

$[Me_2SiFlu_2Nd(\mu\text{-}BH_4)_2Li(THF)]$ (IIb)

$[Me_2SiFlu_2Nd(\mu\text{-}BH_4)(THF)]$ (IIc)

$[\{Me_2SiFlu_2Nd(\mu\text{-}BH_4)(THF)\}_2]$ (IId)

$[Me_2SiFlu_2Nd(\mu\text{-}BH_4)]$ (IIe)

L'organomagnésien utilisé dans le système catalytique à titre de co-catalyseur est un composé qui présente au moins une liaison C-Mg. A titre de composés organomagnésiens, on peut citer les diorganomagnésiens, en particulier les dialkylmagnésiens et les halogénures d'organomagnésien, en particulier les halogénures d'alkylmagnésien. Un diorganomagnésien est typiquement de formule $MgR^3R^4$ dans laquelle $R^3$ et $R^4$, identiques ou différents, représentent un groupe carboné. On entend par groupe carboné un groupe qui contient un ou plusieurs atomes de carbone. De préférence, $R^3$ et $R^4$ contiennent 2 à 10 atomes de carbone. De manière plus préférentielle, $R^3$ et $R^4$ représentent chacun un alkyle. L'organomagnésien est préférentiellement un diorganomagnésien ou un halogénure d'organomagnésien, avantageusement un dialkylmagnésien, mieux le butyléthylmagnésium ou le butyloctylmagnésium, encore mieux le butyloctylmagnésium.

Le système catalytique peut être préparé de façon traditionnelle par un procédé analogue à celui décrit dans la demande de brevet WO 2007054224 A2 ou WO 2007054223 A2. Par exemple on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère à blocs.

Alternativement, le système catalytique peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un 1,3-diène, l'éthylène ou un mélange d'éthylène et d'un 1,3-diène, auquel cas le système catalytique est à base au moins du métallocène, de l'organomagnésien et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un 1,3-diène, l'éthylène ou un mélange d'éthylène et d'un 1,3-diène. Le monomère de préformation est préférentiellement le 1,3-butadiène ou un mélange d'éthylène et de 1,3-butadiène. Le système catalytique ainsi obtenu peut être utilisé de suite dans le procédé conforme à l'invention ou être stocké sous atmosphère inerte avant son utilisation dans le procédé de polymérisation pour préparer le polymère à blocs.

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 A2; ou WO 2007054223 A2. Le métallocène peut être préparé de façon traditionnelle par un procédé analogue à celui décrit dans la demande de brevet WO 2007054224 A2 ou WO 2007054223 A2, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

L'homme du métier adapte aussi les conditions de polymérisation et les concentrations en chacun des réactifs (constituants du système catalytique, monomères) selon le matériel (outils, réacteurs) utilisé pour conduire la polymérisation. Comme cela est connu de l'homme du métier, la polymérisation ainsi que la manipulation des monomères, du système catalytique et du ou des solvants de copolymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu, dans un réacteur, avantageusement dans un réacteur agité. Le solvant de polymérisation peut être un solvant hydrocarboné, aromatique ou

aliphatique. A titre d'exemple de solvant de polymérisation, on peut citer le toluène et le méthylcyclohexane. Avantageusement, la polymérisation est conduite en solution dans un solvant hydrocarboné tel que le méthylcyclohexane.

L'homme du métier adapte les conditions de polymérisation telles que la température de polymérisation, la concentration en chacun des réactifs, la pression dans le réacteur en fonction de la composition du mélange monomère, du réacteur de polymérisation, de la microstructure et de la macrostructure souhaitées de la chaîne copolymère.

La synthèse du premier bloc est réalisée par la copolymérisation de l'éthylène et du 1,3-butadiène. L'éthylène et le 1,3-butadiène peuvent être introduits dans le réacteur contenant le solvant de polymérisation et le système catalytique ou inversement le système catalytique peut être introduit dans le réacteur contenant le solvant de polymérisation et les monomères, éthylène et 1,3-butadiène.

La température de polymérisation varie généralement dans un domaine allant de 30 à 160°C, préférentiellement de 30 à 120°C. Pendant la synthèse du premier bloc, la température du milieu réactionnel est avantageusement maintenue constante au cours de la polymérisation et la pression totale dans le réacteur est aussi avantageusement maintenue constante. De préférence, la polymérisation du mélange monomère d'éthylène et du 1,3-butadiène est conduite à pression constante d'éthylène.

Pour atteindre la macrostructure souhaitée du premier bloc, l'homme du métier adapte les conditions de polymérisation, notamment le rapport molaire de l'organomagnésien sur le métal Nd constituant le métallocène. Le rapport molaire peut atteindre la valeur de 100, sachant qu'un rapport molaire inférieur à 10 est plus favorable pour l'obtention de polymères de masses molaires élevées.

Au cours de la synthèse du premier bloc, un ajout continu d'éthylène et du 1,3-butadiène peut être réalisé dans le réacteur de polymérisation, auquel cas le réacteur de polymérisation est un réacteur alimenté. Ce mode de réalisation est tout particulièrement adapté pour la synthèse d'un premier bloc qui est un copolymère statistique.

La synthèse du premier bloc s'achève en coupant l'alimentation en monomères, notamment par une chute de la pression dans le réacteur, de préférence jusqu'à environ 3 bars. Le milieu réactionnel à l'issue de la synthèse du premier bloc est dégazé, de préférence en procédant à plusieurs reprises à un dégazage avec un gaz inerte, par exemple l'azote. La préparation du polymère à bloc se poursuit avec la synthèse du deuxième bloc par l'homopolymérisation subséquente de la vinylpyridine dans le milieu réactionnel dégazé.

La vinylpyridine peut être un mélange de vinylpyridines ou un des isomères de la vinylpyridine, l'isomérie étant déterminée par le carbone substitué du cycle aromatique de la pyridine. De préférence, la vinylpyridine est la 4-vinylpyridine, la 2-vinylpyridine ou leur mélange. De manière plus préférentielle, la vinylpyridine est la 4-vinylpyridine. Lorsque la vinylpyridine est conditionnée en présence d'un stabilisant, comme c'est le cas pour la plupart des vinylpyridines commerciales, elle est utilisée typiquement après élimination du stabilisant qui peut être réalisée de manière bien connue par distillation ou par contact avec de l'alumine, par exemple par traitement sur des colonnes d'alumine.

La vinylpyridine peut être ajoutée dans le réacteur pure ou diluée dans un solvant hydrocarboné, de préférence aliphatique comme le méthylcyclohexane. La vinylpyridine, pure ou diluée, est introduit dans le milieu réactionnel dégazé. La quantité de vinylpyridine introduite dans le milieu réactionnel qui est à polymériser pour former le deuxième bloc est ajustée par l'homme du métier selon le taux souhaité de vinylpyridine sous la forme de bloc dans le polymère à blocs. Elle peut varier dans une large mesure, en particulier de 0.01 à 25 g pour 100 g de premier bloc formé, plus particulièrement de 2 à 25 g pour 100 g de premier bloc formé. L'homopolymérisation de la vinylpyridine est conduite de préférence à une température identique à celle de la synthèse du premier bloc. La température de polymérisation pour la synthèse du deuxième bloc varie généralement dans un domaine allant de 30 à 160°C, préférentiellement de 30 à 120°C. La synthèse du deuxième bloc peut être suivie typiquement par analyse chromatographique pour suivre la consommation de la vinylpyridine. La synthèse du deuxième bloc s'achève quand le deuxième bloc atteint la masse molaire moyenne en nombre souhaitée ou quand la conversion de la réaction de polymérisation de la vinylpyridine atteint la conversion souhaitée, par exemple 100%.

La synthèse du deuxième bloc peut être stoppée par refroidissement du milieu de polymérisation ou par ajout d'un alcool, préférentiellement un alcool contenant 1 à 3 atomes de carbone, par exemple l'éthanol. Le polymère à blocs peut être récupéré selon les techniques classiques connues de l'homme du métier comme par exemple par précipitation, par évaporation du solvant sous pression réduite ou par entraînement (ou « stripping ») à la vapeur d'eau.

De préférence, le polymère à blocs conforme à l'invention qui peut être préparé par le procédé conforme à l'invention est un dibloc.

Le polymère à blocs peut être ajouté à une huile de base minérale pour former une composition lubrifiante, autre objet de l'invention. Le polymère à blocs constitutif de la composition lubrifiante peut être un mélange de polymères à blocs tels que définis précédemment qui se différencient les uns des autres par leur composition respective.

Comme huiles de base minérales qui peuvent convenir, on peut citer les huiles de base du groupe I, les huiles de base du groupe II et les huiles de base du groupe III, et leurs mélanges. Les groupes I à III sont définis de manière connue selon l'« American Petroleum Institute » (API) dans sa publication « API N°1509 Engine Oil Licensing and Certification Système, Appendix E, 14th Edition » de décembre 1996. Les huiles de base minérale sont obtenues typiquement par

distillation atmosphérique et sous vide du pétrole brut, éventuellement suivies d'opérations de raffinage.

Le taux du polymère à blocs ajouté à l'huile de base minérale est ajusté par l'homme du métier selon la nature de l'huile de base minérale, selon les caractéristiques du polymère à blocs et bien sûr selon l'usage de la composition lubrifiante. Le taux massique du polymère à blocs dans la composition lubrifiante ou du mélange de polymères à blocs dans la composition lubrifiante peut aller jusqu'à 5% en poids de la composition lubrifiante, par exemple de 0.01 à 5% en poids de la composition lubrifiante, préférentiellement de 0.05 à 2% en poids de la composition lubrifiante. De préférence, l'huile de base minérale est une huile de base du groupe I.

Le mélange formé par l'huile de base et le polymère à blocs constitue une composition lubrifiante qui peut contenir par ailleurs d'autres additifs traditionnellement utilisés dans une huile de moteur tels que des détergents et dispersants, des antioxydants, des composés ayant une action contre la formation de rouille, de mousse, de gel.

La composition lubrifiante conforme à l'invention présente des propriétés d'épaississement à haute température à l'instar des huiles de moteur contenant des améliorants de viscosité traditionnellement utilisés tels que des copolymères d'éthylène et de propylène.

En résumé, l'invention est mise en œuvre avantageusement selon l'un quelconque des modes de réalisation suivants 1 à 14 :

Mode 1 : Polymère à blocs contenant un premier bloc et un deuxième bloc, le premier bloc étant un copolymère de 1,3-butadiène et d'éthylène contenant plus de 90% en mole d'unités éthylène, le pourcentage molaire étant exprimé par rapport au nombre total d'unités de répétition constitutives du premier bloc, le deuxième bloc étant un homopolymère d'une vinylpyridine.

Mode 2 : Polymère à blocs selon le mode 1 dans lequel le premier bloc est un copolymère statistique d'éthylène et de 1,3-butadiène.

Mode 3 : Polymère à blocs selon l'un quelconque des modes 1 à 2 lequel polymère à blocs est un dibloc.

Mode 4 : Polymère à blocs selon l'un quelconque des modes 1 à 3 dans lequel les unités éthylène présentes dans le premier bloc représentent moins de 97% en mole du nombre total des unités de répétition constitutives du premier bloc.

Mode 5 : Polymère à blocs selon l'un quelconque des modes 1 à 4 dans lequel le premier bloc contient des motifs 1,2-cyclohexanediyle.

Mode 6 : Polymère à blocs selon le mode 5 dans lequel le taux molaire de motif 1,2-cyclohexanediyle dans le premier bloc est inférieure à 10% du nombre total des unités de répétition constitutives du premier bloc.

Mode 7 : Polymère à blocs selon le mode 5 ou 6 dans lequel le taux molaire de motif 1,2-cyclohexanediyle dans le premier bloc varie de 1% à moins de 10% du nombre total des unités de répétition constitutives du premier bloc.

Mode 8 : Polymère à blocs selon l'un quelconque des modes 1 à 7 dans lequel la vinylpyridine est la 4-vinylpyridine, la 2-vinylpyridine ou leur mélange.

Mode 9 : Polymère à blocs selon l'un quelconque des modes 1 à 8 dans lequel le taux molaire des unités de vinylpyridine présentes dans le deuxième bloc est supérieur à 0.1% du nombre total des unités de répétition constitutives du premier bloc.

Mode 10 : Polymère à blocs selon l'un quelconque des modes 1 à 9 dans lequel le taux molaire des unités de vinylpyridine dans le deuxième bloc est inférieur à 20% du nombre total des unités de répétition constitutives du premier bloc.

Mode 11 : Composition lubrifiante qui comprend une huile de base minérale et un polymère à blocs défini à l'un quelconque des modes 1 à 10.

Mode 12 : Composition lubrifiante selon le mode 11 dans laquelle le taux massique du polymère à blocs varie de 0.01 à 5% en poids de la composition lubrifiante.

Mode 13 : Composition lubrifiante selon le mode 11 ou 12 dans laquelle le taux massique du polymère à blocs varie de 0.05 à 2% en poids de la composition lubrifiante.

Mode 14 : Composition lubrifiante selon l'un quelconque des modes 11 à 13 dans laquelle l'huile de base minérale est une huile de base du groupe I.

## Exemples

Détermination de la microstructure des polymères :

La spectroscopie RMN haute résolution des polymères a été effectuée sur un spectromètre Bruker 600 Avance III HD opérant à 600 MHz équipé d'une sonde CP2.1 BBO 600S3 pour le proton. Les acquisitions sont faites à 368 K. L'orthodichlorobenzene (o-DCB) est utilisé comme solvant. Les échantillons ont été analysés à une concentration d'environ 1 % en masse pour les analyses en RMN du proton (RMN $^1$H). Les déplacements chimiques sont déterminés relativement au signal proton de l'orthodichlorobenzène fixé à 7,2 ppm. Une analyse 2D a été réalisée en utilisant la

séquence suivante : **HSQC** : Pulse program ; hsqcetgpsi2 « HSQC avec gradients » ; SW1 : 180 ppm ($^{13}C$) SW2 : 12 ppm ($^{1}H$) ; d1 : 10 s ; Impulsion 90 ° « hard » $^{1}H$ P1 = 13 μs et 16 W et $^{13}C$ P2 = 26 μs et 84 W ; Gradient : SMSQ10.100.

L'attribution des signaux caractéristiques du premier bloc est définie dans la littérature, selon l'article de Llauro et al., Macromolecules 2001, 34, 6304-6311.

L'attribution des signaux caractéristiques du deuxième bloc est définie comme suit $\delta^{1}H$ = 8.29ppm (=CH-N=CH-) ; $\delta^{1}H$ = 6.34ppm (=C**H**-C($CH_2$)=C**H**-) ; $\delta^{13}C$ = 150ppm (=CH-N=CH-) ; $\delta^{13}C$ = 6.34ppm (=**C**H-C($CH_2$)=**C**H-)

Analyse RMN DOSY (diffusion ordered spectroscopy) des polymères à blocs :

L'expérience DOSY, méthode RMN, permet d'analyser des mélanges complexes et la détection de traces. Le but de cette expérience est de démontrer que le polymère à blocs représente l'essentiel de l'échantillon et que la présence d'homopolymère est très faible ou absente.

L'analyse par RMN DOSY permet de séparer les espèces présentes, notamment des matrices polymères, par analyse de leur coefficient de diffusion en solution. Le principe de la technique est le suivant :
L'expérience DOSY consiste à enregistrer des spectres protons en faisant varier la force G des gradients appliquée et ainsi, la force de diffusion. Une augmentation linéaire de l'intensité des gradients va entrainer une décroissance exponentielle de l'intensité du signal RMN. L'expérience DOSY va donner une carte bidimensionnelle. La 2ème dimension F2 de la DOSY correspond, après traitement par la transformée de Fourier, à la dimension 1H. La 1ère dimension F1 correspond à la décroissance du signal RMN en fonction de la force gradient appliquée. Apres traitement de la dimension F2, on extrait le coefficient de diffusion à partir de l'équation (1), et on obtient une carte DOSY.

$$I = I0.\exp(-D\gamma^2 G^2 \delta^2 (\Delta - \delta/3)) \quad (1)$$

où I est l'intensité observée, I0 l'intensité de référence, D le coefficient de diffusion, γ le ratio gyromagnétique du noyau observé, G la force du gradient, δ la longueur du gradient et Δ le temps de diffusion.

Si les deux matrices ont un coefficient de diffusion identique, cela signifie que les deux matrices ont le même rayon hydrodynamique, et sont donc greffées. En revanche, si les deux matrices présentes deux coefficients de diffusion différents, cela signifie qu'elles sont libres l'une de l'autre.

L'équation qui décrit le coefficient de diffusion est la suivante :

$$D = \frac{k_B T}{6\pi\eta rs}$$

dans laquelle $k_B$ est la constante de Boltzman, T la température, η la viscosité du liquide dans lequel est la molécule, rs le rayon hydrodynamique de la molécule (en l'espèce la matrice ou le polymère).
L'expérience a été conduit sur des échantillons de poly(butadiène-b-poly(éthylène-co-butadiène) synthétisé selon le procédé conforme à l'invention.

L'enregistrement de deux spectres RMN 1D 1H avec un filtre de diffusion, l'un avec un gradient de champs magnétiques fixé à 90% de la puissance maximale de l'amplificateur gradient et l'autre à 1% de cette valeur, permet par comparaison avec le spectre RMN 1H d'observer la part de perte de signal due à de la diffusion spatiale des molécules et à la relaxation de l'aimantation. La perte de signal due à de la diffusion est alors attribuée à des « petites molécules » non greffées à la matrice polymère (réactifs, antioxydants, solvants, ...).

Détermination de la macrostructure des polymères :

On utilise la chromatographie d'exclusion stérique (Size Exclusion Chromatography). On rappelle que la SEC permet de séparer les macromolécules en solution suivant leur taille à travers des colonnes remplies d'un gel poreux. Les macromolécules sont séparées suivant leur volume hydrodynamique, les plus volumineuses étant éluées en premier. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et la dispersité (Đ = Mw/Mn) calculé via un étalonnage dit de MOORE.

Préparation du polymère : Il n'y a pas de traitement particulier de l'échantillon de polymère avant analyse. Celui-ci est simplement solubilisé, dans du 1,2,4-trichlorobenzène contenant 300 ppm de BHT (« butylated hydroxytoluene » ou hydroxytoluène butylé), à une concentration d'environ 1 g/L. La solution est agitée pendant 2h à 160°C avant injection, l'appareil chromatographe utilisé est équipé d'un système de filtration en ligne.

Analyse SEC : On utilise la chromatographie d'exclusion stérique à haute température ou SEC-HT. L'appareillage utilisé est un chromatographe «GPC-IR» équipé d'un détecteur à infrarouge « IR-6 » de « Polymer Char ». La

détection est effectuée par le détecteur IR sur les bandes de vibrations des groupements $CH_2$ et $CH_3$. On utilise un jeu de 3 colonnes de référence commerciale « Mixed BN-LS » de « Polymer Char ». Le solvant d'élution est du 1,2,4-trichlorobenzène contenant 300 ppm de BHT, Le débit est de 1mL/min, la température du système est de 160°C et la durée d'analyse de 90 minutes (min).

Le volume injecté de la solution de l'échantillon de polymère est 200 μl. Le logiciel d'exploitation des données chromatographiques est le système « GPC-one » de « Polymer Char ».

Les masses molaires moyennes sont déterminées à partir d'une courbe d'étalonnage réalisée à partir de polystyrènes étalons commerciaux « PSS READY CAL-KIT ».

Détermination du taux de cristallinité des polymères, de leur point de fusion et de leur température de transition vitreuse :

Le taux de cristallinité, le point de fusion et la température de transition vitreuse sont déterminés par analyse calorimétrique différentielle (DSC). Les analyses sont effectuées sur un appareil DSC « NETZSCH DSC 214 Polyma » calibré à l'indium. Cet appareil dispose d'une plage de température allant de -150 à 700 °C. Un ordinateur intégré à la DSC pilote l'appareil à l'aide du logiciel Proteus de chez Netzsch. L'échantillon (10 mg environ) est pesé et scellé dans un creuset en aluminium de 40 μL. Le creuset est percé avec une fine aiguille juste avant la mesure. Les échantillons sont analysés sous hélium à 40 mL/min suivant une méthode dynamique comportant 7 paliers de température :
Palier 1 : refroidissement de 25°C à -150°C à 50°C/min ; Palier 2 : isotherme à -150°C pendant 5 min ; Palier 3 : chauffage de -150°C à 200°C à 20°C/min ; Palier 4 : isotherme à 200°C pendant 5 min ; Palier 5 : refroidissement de 200°C à -150°C à 20°C/min ; Palier 6 : isotherme à -150°C pendant 5 minutes ; Palier 7 : chauffage de -150°C à 200°C à 20°C/min.

Les quatre premiers paliers permettent d'effacer le passé thermique de l'échantillon. Les mesures de la température de transition vitreuse (Tg) et de la température de fusion (Tf) se font sur le 7$^{ème}$ palier. Le 7$^{ème}$ palier est également conservé pour obtenir des informations sur la cristallisation de l'échantillon et déterminer le taux de cristallinité. Les valeurs de Tg et de Tf sont déterminées en appliquant le retraitement de données du logiciel « Proteus » de chez « Netzsch ». Le taux de cristallinité est déterminé en utilisant la norme ISO 11357-3 : 2011 pour mesurer la température et l'enthalpie de fusion et de cristallisation des polymères utilisés par analyse calorimétrique différentielle (DSC). L'enthalpie de référence du polyéthylène est de 293 J/g (source : B. Wunderlich, Thermal analysis, Academic Press, 1990, 281).

Synthèse des polymères :

Tous les réactifs sont obtenus commercialement excepté le métallocène $[\{Me_2SiFlu_2Nd(\mu\text{-}BH_4)_2Li(THF)\}]$ qui est préparé selon le mode opératoire décrit dans les demandes de brevet WO 2007054224.

Le butyloctylmagnésium BOMAG (20% en masse dans l'heptane, C = 0,88 mol $L^{-1}$) provient de Lanxess et est stocké dans une bonbonne métallique sous atmosphère inerte. L'éthylène, de qualité N35, provient de la société Air Liquide et est utilisé sans purification préalable. Le 1,3-butadiène est purifié sur gardes d'alumine. Le solvant méthylcyclohexane provenant de chez BioSolve est séché et purifié sur colonne d'alumine dans une fontaine à solvant provenant de chez mBraun et utilisé en atmosphère inerte. Toutes les réactions sont effectuées en atmosphère inerte.

Purification du 4-vinylpyridine :

La 4-vinylpyridine purifiée est préparée selon le mode opératoire suivant :
100 mL de 4-vinylpyridine (Sigma-Aldrich, 95% de pureté, contenant 100 ppm d'hydroquinone) sont placés dans une bouteille Steinie. 30 g d'alumine sont introduites dans la bouteille. La bouteille est alors capsulée et agitée pendant 60 minutes à température ambiante (23°C), à l'abri de la lumière.

Préparation d'une solution de 4-vinylpyridine dans le méthylcyclohexane :

Avant toute utilisation pour préparer des solutions, le méthylcyclohexane (MCH) est purifié par passage sur des gardes d'alumine.

Une première solution de 4-vinylpyridine dans le MCH, solution A, est préparée en introduisant 0.26 mL de 4-vinylpyridine purifié dans 20 mL de MCH contenus dans une bouteille Steinie de 250 mL capsulée et mise sous pression d'azote.

Une deuxième solution de 4-vinylpyridine dans le MCH, solution B, est préparée en introduisant 0.65 mL de 4-vinylpyridine purifié dans 20 mL de MCH contenus dans une bouteille Steinie de 250 mL capsulée et mise sous pression d'azote.

Les bouteilles contenant les solutions A et B respectivement sont mises sous pression à 3 bars d'azote.

Exemple 1 : Préparation d'un polymère à blocs conforme à l'invention :

30.4 mg (47.5 μmol) du métallocène $Me_2Si(C_{13}H_8)_2Nd(BH_4)_2Li.THF$ sont pesés dans une bouteille Steinie de 250 mL en boîte à gants.

296 mL de MCH sont introduits dans une bouteille Steinie de 750 mL. La bouteille est mise sous atmosphère inerte par un bullage à l'azote pendant 10 minutes. 4 .57mL (499 μmol, Mg/Nd = 10.5) d'une solution de butyloctylmagnésium à 0.11 mol/L dans le MCH sont introduits dans la bouteille de 750 mL contenant le MCH pour former une solution C.

On prépare aussi un mélange monomère d'éthylène et de 1,3-butadiène contenant 92% molaire d'éthylène et 8% molaire de 1,3-butadiène en injectant dans un ballast d'abord 0.48 bar de 1,3-butadiène, puis 5.52 bars d'éthylène pour compléter le mélange gazeux. On obtient 6 bars absolu d'un mélange à 92% molaire d'éthylène et 8% molaire de 1,3-butadiène (mélange éthylène/butadiène : 92/8).

Le ballast est relié à un réacteur de polymérisation.

Environ un tiers de la solution C est transférée dans la bouteille de 250 mL contenant le métallocène par l'intermédiaire d'une canule pour activer le métallocène et former le système catalytique.

La moitié de la solution C est introduite dans le réacteur agité (à 400 tours par minute) et porté à 77°C, le réacteur étant mis au préalable sous atmosphère inerte. Le contenu de la bouteille de 250 mL contenant le système catalytique est introduit dans le réacteur. Le reste de la solution C est ensuite transféré dans le réacteur. Le réacteur est dégazé sous vide jusqu'à formation de bulles de gaz, puis pressurisé à 3 bars avec le mélange éthylène/butadiène : 92/8.

Lorsque la pression du ballast affiche une chute de pression correspondant à 12.7 g de monomères, le réacteur est dégazé avec 3 cycles évent/azote.

La solution A contenant la 4-vinylpuridine est introduite dans le réacteur. L'agitation est maintenue pendant 1 heure, puis le chauffage est coupé et l'agitation arrêtée.

Le réacteur est démonté, le milieu de polymérisation est désactivé avec 2 mL d'éthanol pour stopper la réaction de polymérisation, puis transféré dans une barquette en aluminium et séché sous vide à 60°C dans une étuve pendant 24 h. Le polymère récupéré est blanc et opaque.

Après 24h, le polymère sec est récupéré pour les analyses. Le polymère à blocs est un dibloc contenant un premier bloc d'un copolymère statistique d'éthylène et de 1,3-butadiène et un deuxième bloc de poly(4-vinylpyridine).

Le premier bloc du polymère à blocs contient 91% en mole d'unité éthylène, 6% en mole d'unité 1,2-cyclohexanediyle, 1% en mole d'unité du 1,3-butadiène sous la configuration 1,2 et 2% en mole d'unité du 1,3-butadiène sous la configuration 1,4, majoritairement 1,4-trans. Le deuxième bloc de poly(4-vinylpyridine) représente 0.5 % en mole du nombre total d'unités éthylène, d'unités du 1,2-cyclohexanediyle, d'unités du 1,3-butadiène sous la configuration 1,2 et d'unités du 1,3-butadiène sous la configuration 1,4-trans.

La RMN DOSY montre un coefficient de diffusion correspondant au polymère à blocs EBR-b-PVP. Le polymère à blocs, analysé par SEC/HT, présente une masse molaire moyenne en nombre de 12500 g/mol et un indice de dispersité de 1.88.

Exemple 2 : Préparation d'un polymère à blocs conforme à l'invention :

Un polymère à blocs est préparé selon un mode opératoire identique à celui de l'exemple 1 à la différence près que la solution A est remplacée par la solution B. Le premier bloc du polymère à blocs contient 92% en mole d'unités éthylène, 5% en mole d'unités 1,2-cyclohexanediyle, 1% en mole d'unités du 1,3-butadiène sous la configuration 1,2 et 2% en mole d'unités du 1,3-butadiène sous la configuration 1,4, majoritairement 1,4-trans. Le taux molaire d'unités de la 4-vinylpyridine est de 1.4% en mole du nombre total d'unités éthylène, d'unités du 1,2-cyclohexanediyle, d'unités du 1,3-butadiène sous la configuration 1,2 et d'unités du 1,3-butadiène sous la configuration 1,4, majoritairement 1,4-trans.

Le polymère à blocs, analysé par SEC/HT, présente une masse molaire moyenne en nombre de 12000 g/mol et un indice de dispersité de 1.9.

La masse pesée de polymère à blocs permet de déterminer l'activité catalytique moyenne du système catalytique exprimée en kilogramme de polymère synthétisé par mole de métal néodyme et par heure (kg/mol.h). L'activité catalytique est de 214 kg.mol/h.

La Tg du bloc polyvinylpyridine est de 160°C. La cristallinité du polymère à blocs est de 36.8%.

Exemple 3 : Préparation d'un copolymère statistique éthylène-1,3-butadiène, non conforme à l'invention :

Un polymère est préparé selon un mode opératoire identique à celui de l'exemple 1 et de l'exemple 2 à la différence qu'aucune solution de vinylpyridine n'est ajoutée après la copolymérisation de l'éthylène et du 1,3-butadiène. Lorsque la pression du ballast affiche une chute de pression correspondant à 12.7 g de monomères, le réacteur est dégazé avec 3 cycles évent/azote et le mélange stoppé avec 2 mL d'éthanol.

La solution de polymère est ensuite séchée dans une étuve sous vide à 60°C et sous balayage d'azote pendant 24h.

La masse pesée de copolymère permet de déterminer l'activité catalytique moyenne du système catalytique exprimée en kilogramme de polymère synthétisé par mole de métal néodyme et par heure (kg/mol.h). L'activité catalytique est de 191 Kg/mol.h.

L'analyse SEC HT du copolymère montre une distribution moléculaire monomodale, et une Mn de 11 800 g/mol avec une dispersité de 1.87.

Le copolymère d'éthylène et de 1,3-butadiène contient 91% en mole d'unité éthylène, 6% en mole d'unité 1,2-cyclohexanediyle, 1% en mole d'unité du 1,3-butadiène sous la configuration 1,2 et 2% en mole d'unité du 1,3-butadiène sous la configuration 1,4.

La Tg du copolymère d'éthylène et de 1,3-butadiène est à -21°C. Le thermogramme DSC montre un phénomène endothermique au passage de la température de transition (-21°C) identique à celui de l'exemple 1 et de l'exemple 2.

L'exemple 3 est un exemple témoin, puisqu'il correspond à la synthèse du premier bloc des exemples 1 et 2.

Préparation des compositions lubrifiantes contenant une huile de base 600 :

Des compositions lubrifiantes C0, C1 et C2 sont préparées selon le mode opératoire suivant :
Dans une bouteille steinie de 250 mL contenant 200 g d'une huile de base minérale CORE™ 600 de groupe I sont introduits 1 g de polymère. La bouteille steinie est capsulée et mise sous agitation dans un bain thermostaté à 90°C pendant 12 heures. La viscosité du mélange résultant est mesurée à 100°C. Pour la composition C1, le polymère est le polymère à blocs de l'exemple 1; pour la composition C2, le polymère est le polymère à blocs de l'exemple 2 ; pour la composition C0, le polymère est un polymère OCP commercialisé par la société Lubrizol sous la référence « 7077 », copolymère d'éthylène et de propylène à environ 50% molaire d'éthylène. La composition C0 contenant une huile de base 600 est une composition de référence, puisqu'elle contient un copolymère non conforme à l'invention, le copolymère « 7077 » de la société Lubrizol, additif couramment utilisé dans les huiles de moteur comme agent épaississant à haute température (100°C). L'huile de base « CORE™ 600 » commercialisée par la société Exxon est une huile de base minérale de groupe I et est couramment utilisée comme huile de base dans les huiles de moteur.

La viscosité cinématique à 100°C des compositions lubrifiantes est mesurée selon la norme ASTM 445-21. Les résultats de viscosité présentés en base 100 par rapport à un témoin figurent dans le tableau 1. Le témoin consiste en la même huile de base qui est utilisée dans les compositions lubrifiantes.

Tableau 1

| Composition lubrifiante | T1 | C0 | C1 | C2 |
|---|---|---|---|---|
| Huile de base | 600 | 600 | 600 | 600 |
| Polymère | - | OCP | Exemple 1 | Exemple 2 |
| Viscosité à 100°C | 100 | 103 | 108 | 109 |

Il est observé que la composition lubrifiante contenant un polymère à blocs conforme à l'invention (C1 ; C2) a une viscosité à 100°C qui est supérieure à celle de l'huile de base qu'elle contient (T1). Les viscosités des compositions lubrifiantes C1 et C2 sont supérieures à celle de la composition de référence C0. Ce résultat est obtenu alors même que les copolymères selon l'invention ont une masse molaire moyenne en nombre très inférieure à celle du copolymère OCP. De manière surprenante, comme agent épaississant à haute température des huiles de base minérales, les polymères à blocs selon l'invention s'avèrent aussi efficaces qu'un copolymère OCP.

## Revendications

1. Polymère à blocs contenant un premier bloc et un deuxième bloc, le premier bloc étant un copolymère de 1,3-butadiène et d'éthylène contenant plus de 90% en mole d'unités éthylène, le pourcentage molaire étant exprimé par rapport au nombre total d'unités de répétition constitutives du premier bloc, le deuxième bloc étant un homopolymère d'une vinylpyridine.

2. Polymère à blocs selon la revendication 1 dans lequel le premier bloc est un copolymère statistique d'éthylène et de 1,3-butadiène.

3. Polymère à blocs selon l'une quelconque des revendications 1 à 2 lequel polymère à blocs est un dibloc.

4. Polymère à blocs selon l'une quelconque des revendications 1 à 3 dans lequel les unités éthylène présentes dans le premier bloc représentent moins de 97% en mole du nombre total des unités de répétition constitutives du premier bloc.

5. Polymère à blocs selon l'une quelconque des revendications 1 à 4 dans lequel le premier bloc contient des motifs 1,2-cyclohexanediyle.

6. Polymère à blocs selon la revendication 5 dans lequel le taux molaire de motif 1,2-cyclohexanediyle dans le premier bloc est inférieure à 10% du nombre total des unités de répétition constitutives du premier bloc.

7. Polymère à blocs selon la revendication 5 ou 6 dans lequel le taux molaire de motif 1,2-cyclohexanediyle dans le premier bloc varie de 1% à moins de 10% du nombre total des unités de répétition constitutives du premier bloc.

8. Polymère à blocs selon l'une quelconque des revendications 1 à 7 dans lequel la vinylpyridine est la 4-vinylpyridine, la 2-vinylpyridine ou leur mélange.

9. Polymère à blocs selon l'une quelconque des revendications 1 à 8 dans lequel le taux molaire des unités de vinylpyridine présentes dans le deuxième bloc est supérieur à 0.1% du nombre total des unités de répétition constitutives du premier bloc.

10. Polymère à blocs selon l'une quelconque des revendications 1 à 9 dans lequel le taux molaire des unités de vinylpyridine dans le deuxième bloc est inférieur à 20% du nombre total des unités de répétition constitutives du premier bloc.

11. Composition lubrifiante qui comprend une huile de base minérale et un polymère à blocs défini à l'une quelconque des revendications 1 à 10.

12. Composition lubrifiante selon la revendication 11 dans laquelle l'huile de base minérale est une huile de base du groupe I.

## Patentansprüche

1. Blockpolymer, das einen ersten Block und einen zweiten Block enthält, wobei es sich bei dem ersten Block um ein Copolymer von 1,3-Butadien und Ethylen, das mehr als 90 Mol-% Ethyleneinheiten enthält, handelt, wobei der Molprozentanteil im Verhältnis zur Gesamtzahl der Wiederholungseinheiten des ersten Blocks ausgedrückt ist, wobei es sich bei dem zweiten Block um ein Homopolymer eines Vinylpyridins handelt.

2. Blockpolymer nach Anspruch 1, wobei es sich bei dem ersten Block um ein statistisches Copolymer von Ethylen und 1,3-Butadien handelt.

3. Blockpolymer nach einem der Ansprüche 1 bis 2, wobei es sich bei dem Blockpolymer um einen Diblock handelt.

4. Blockpolymer nach einem der Ansprüche 1 bis 3, wobei die im ersten Block vorliegenden Ethyleneinheiten weniger als 97 Mol-% der Gesamtzahl der Wiederholungseinheiten, aus denen der erste Block aufgebaut ist, ausmachen.

5. Blockpolymer nach einem der Ansprüche 1 bis 4, wobei der erste Block 1,2-Cyclohexandiyleinheiten enthält.

6. Blockpolymer nach Anspruch 5, wobei der molare Gehalt an 1,2-Cyclohexandiyleinheiten in dem ersten Block weniger als 10 % der Gesamtzahl der Wiederholungseinheiten, aus denen der erste Block aufgebaut ist, beträgt.

7. Blockpolymer nach Anspruch 5 oder 6, wobei der molare Gehalt an 1,2-Cyclohexandiyleinheiten in dem ersten Block von 1 % bis weniger als 10 % der Gesamtzahl der Wiederholungseinheiten, aus denen der erste Block aufgebaut ist, variiert.

8. Blockpolymer nach einem der Ansprüche 1 bis 7, wobei es sich bei dem Vinylpyridin um 4-Vinylpyridin, 2-Vinylpyridin oder eine Mischung davon handelt.

9. Blockpolymer nach einem der Ansprüche 1 bis 8, wobei der molare Gehalt an Vinylpyridineinheiten in dem zweiten Block mehr als 0,1 % der Gesamtzahl der Wiederholungseinheiten, aus denen der erste Block aufgebaut ist, beträgt.

10. Blockpolymer nach einem der Ansprüche 1 bis 9, wobei der molare Gehalt an Vinylpyridineinheiten in dem zweiten Block weniger als 20 % der Gesamtzahl der Wiederholungseinheiten, aus denen der erste Block aufgebaut ist, beträgt.

11. Schmiermittelzusammensetzung, die ein mineralisches Grundöl und ein Blockpolymer gemäß Definition in einem der Ansprüche 1 bis 10 umfasst.

12. Schmiermittelzusammensetzung nach Anspruch 11, wobei es sich bei dem mineralischen Grundöl um ein Grundöl der Gruppe I handelt.

## Claims

1. Block polymer containing a first block and a second block, the first block being a copolymer of 1,3-butadiene and ethylene, containing more than 90 mol% of ethylene units, the molar percentage being expressed relative to the total number of constituent repeat units of the first block, the second block being a homopolymer of a vinylpyridine.

2. Block polymer according to Claim 1, wherein the first block is a statistical copolymer of ethylene and 1,3-butadiene.

3. Block polymer according to either one of Claims 1 to 2, which block polymer is a diblock.

4. Block polymer according to any one of Claims 1 to 3, wherein the ethylene units present in the first block represent less than 97 mol% of the total number of constituent repeat units of the first block.

5. Block polymer according to any one of Claims 1 to 4, wherein the first block contains 1,2-cyclohexanediyl subunits.

6. Block polymer according to Claim 5, wherein the molar content of 1,2-cyclohexanediyl subunits in the first block is less than 10% of the total number of constituent repeat units of the first block.

7. Block polymer according to Claim 5 or 6, wherein the molar content of 1,2-cyclohexanediyl subunits in the first block varies from 1% to less than 10% of the total number of constituent repeat units of the first block.

8. Block polymer according to any one of Claims 1 to 7, wherein the vinylpyridine is 4-vinylpyridine, 2-vinylpyridine or the mixture thereof.

9. Block polymer according to any one of Claims 1 to 8, wherein the molar content of vinylpyridine units present in the second block is greater than 0.1% of the total number of constituent repeat units of the first block.

10. Block polymer according to any one of Claims 1 to 9, wherein the molar content of vinylpyridine units in the second block is less than 20% of the total number of constituent repeat units of the first block.

11. Lubricating composition comprising a mineral base oil and a block polymer as defined in any one of Claims 1 to 10.

12. Lubricating composition according to Claim 11, wherein the mineral base oil is a group I base oil.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2021023924 A
- WO 2017103543 A
- WO 2018104669 A
- WO 2007054224 A2
- WO 2007054223 A2
- WO 2017093654 A1
- WO 2018020122 A1
- WO 2007054224 A


### Littérature non-brevet citée dans la description


- *Macromolecules*, 2009, vol. 42, 3774-3779
- API N°1509 Engine Oil Licensing and Certification Système. Appendix E. December 1996
- **LLAURO et al.** *Macromolecules*, 2001, vol. 34, 6304-6311
- **B. WUNDERLICH**. Thermal analysis. Academic Press, 1990, 281